# EUROPEAN PATENT SPECIFICATION

(11) **EP 2 151 446 B1**
(45) Date of publication and mention of the grant of the patent: **13.04.2016**
(21) Application number: 08290748.6
(22) Date of filing: 01.08.2008
(51) Int. Cl.: C07F 15/00

(54) **Process for the preparation of bidentate schiff base ruthenium catalysts containing a salicylaldimine-type ligand**
Verfahren zur Herstellung von Bidentat-Schiffbasen-Ruthenium-Katalysatoren mit einem Salicyldimin-Liganden
Procédé pour la préparation de catalyseurs de réthénium à base de Schiff de ligand contenant un ligand de type salicyldimine

(43) Date of publication of application: 10.02.2010
(73) Proprietor: Rimtec Corporation, Tokyo 100-0005 (JP)
(72) Inventor: Drozdzak, Renata, 62320 Drocourt (FR); Nishioka, Naoki, 62320 Drocourt (FR)
(74) Representative: Beckmann, Claus

(56) References cited:
- CHANG, S. ET AL.: "synthesis and characterization of new ruthenium-based olefin metathesis catalysts coordinated with bidentate schiff-base ligands" ORGANOMETALLICS, vol. 17, no. 16, 1998, pages 3460-3465, XP002509214
- OCCHIPINTI, G. ET AL.: "green and efficient synthesis of bidentate schiff base ru catalysts for olefin metathesis" JOURNAL OF ORGANIC CHEMISTRY, vol. 72, no. 9, 2007, pages 3561-3564, XP002509215

## Description

### Field of the invention

The present invention relates to a process for the preparation of bidentate Schiff base ruthenium catalysts containing a salicylaldimine-type ligand.

### Background of the invention

During recent years, olefin metathesis has seen extraordinary development and has turned out to be a very versatile and efficient tool in organic synthesis. Ruthenium-based catalysts have become the first-choice catalysts for organic synthesis. During recent years, a huge effort has been dedicated to further develop and improve the characteristics of the Grubbs-type ruthenium catalysts. In this context, in 1998, Grubbs and co-workers disclosed a class of ruthenium-based catalyst for olefin metathesis involving bidentate Schiff base ligands 3. The synthetic protocol for the bidentate Schiff base Ru catalysts disclosed by Grubbs and co-workers, however, is saddled with a serious drawback, namely the use of a thallium(I) as counter ion for salicylaldimines (Scheme 1) (S. Chang, LeRoy Jones II, Ch. Wang, L. M. Henling, R. H. Grubbs; Organometallics 1998, 17, 3460-3465).

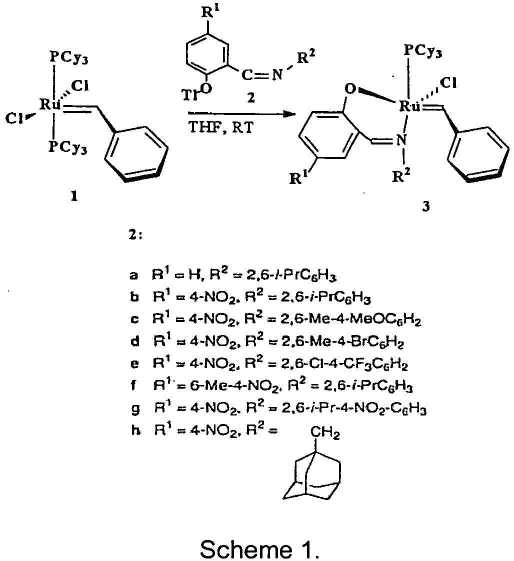

Further improvement of Grubbs protocol has been given by Bjorsvik and co-workers, where the complexation with ruthenium was conducted by reacting one salicylaldimine ligand equivalent with 1 equiv of Grubbs first-generation catalyst (1) in presence of a 0.5 equiv of Ag₂CO₃ used as base (G. Occhipinti, V. R. Jensen, H. R. Bjørsvik, J. Org. Chem. 2007, 72, 3561-564). The complexation utilising the ligands containing nitro group provided a yield in the range 78-96%, which was as good as or better than the previously disclosed protocol.

The reaction utilising the ligand that lacks the electron-withdrawing p-nitro group, however, provided only a tiny yield, <2%. Attempts to improve the outcome of this reaction by prolonged reaction time and elevated temperature did not afford any significant improvements (a yield of only 4% was measured). It is believed that the major reason for the unsuccessful complexation was the relatively weak base (silver carbonate) that is used for the deprotonation of the phenolic group.

Further efforts concerning the synthesis of NHC-salicylaldimine complexes concentrated on using the standard means for introducing the H₂IMes ligand, i.e., *in situ* formation of the free carbene from the imidazolinium salt with potassium *tert*-butoxide and subsequent reaction with the phosphine bearing ruthenium complex **3.** Attempts to prepare complex **4** by this method resulted, however, in decomposition of the ruthenium benzylidene starting material. Faced with this roadblock, Verpoort et al. have chosen to approach **4** by introducing salicylaldimine ligands to a complex already bearing the H₂IMes ligand (B. Allaert, N. Di-eltiens, N. Ledoux, C. Vercaemst, P. Van Der Voort, Ch. V. Stevens, A. Linden, F. Verpoort, J. Mol. Cat. A: 2006, 260, 221-226). Alkoxide and aryloxide ligands, as well as neutral donors, react readily with *bis* (pyridine) precursor **6.** The pyridine ligands in **6** are far more labile than the phosphine ligand in **5** and are displaced easily by incoming Schiff base ligand, especially with the assistance of thallium ions. Accordingly, the thallium salts of salicylaldimine ligands **2** were prepared *in situ* with thallium ethoxide and reacted with **6** (Scheme 2).

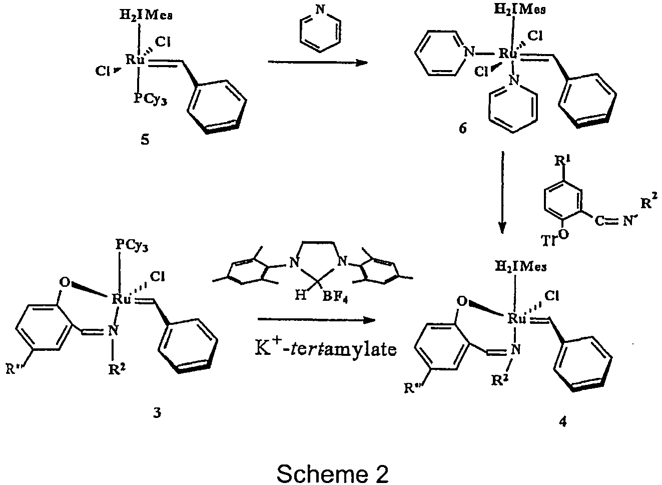

### Summary of the invention

It is the object underlying the present invention to provide a short, efficient and environmentally benign alternative synthetic process for the preparation of bidentate Schiff base Ru catalysts.

The present invention provides a process for the preparation of a catalyst having the following formula: 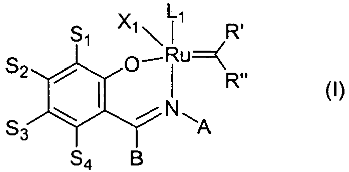 wherein
X₁ denotes an anionic ligand;
L₁ is a neutral electron donor ligand;
R' and R" are each independently hydrogen or a radical selected from the group consisting of C₁₋₂₀ alkyl, C₂₋₂₀ alkenyl, C₂₋₂₀ alkynyl, C₁₋₂₀ carboxylate, C₁₋₂₀ alkoxy, C₂₋₂₀ alkenyloxy, C₂₋₂₀ alkynyloxy, aryl, aryloxy, C₁₋₂₀ alkoxycarbonyl, C₁₋₈ alkylthio, C₁₋₂₀ alkylsulfonyl, C₁₋₂₀ alkylsulfinyl, C₁₋₂₀ alkylsulfonate, arylsulfonate, C₁₋₂₀ alkylphosphonate, arylphosphonate, C₁₋₂₀ alkylammonium and arylammonium, optionally substituted with one or more moieties selected from the group consisting of C₁₋₁₀ alkyl, C₁₋₁₀ alkoxy, and aryl, or R' and R" may together form an aryl, arylidene, cycloalkyl or heteroaryl group, benzylidene being excluded. In a preferred embodiment, R' and R" together form a [3-phenyl-1 H-inden-1-ylidene] moiety.
The [3-phenyl-1 H-inden-1-ylidene] moiety may hereinafter also be referred to as "phenylindenylidene moiety", and the [1 H-inden-1-ylidene] residue may also be referred to as "indenylidene" group.
S₁ to S₄ may be the same or different and are defined as for the compound of formula (III) shown below;
A is 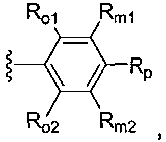 heteroaryl, substituted or unsubstituted alkyl, heteroalkyl or cycloalkyl,
B is hydrogen, C₁-C₂₀ alkyl, C₁-C₂₀ heteroalkyl aryl or heteroaryl, wherein each non-hydrogen group may be optionally substituted with one or more moieties selected from the group consisting of C₁-C₁₀ alkyl and aryl;
Rₒ₁, Rₒ₂, Rₘ₁, Rₘ₂ and Rₚ are each selected from the group consisting of hydrogen, C₁-C₂₀ alkyl, C₁-C₂₀ heteroalkyl, C₁-C₂₀ alkoxy, aryl, aryloxy, heteroaryl, heterocycloalkyl, disulfide, carbonate, isocyanate, carbodiimide, carboalkoxy, carbamate and halogen, thioether, ketone, aldehyde, ester, ether, amine, amide, nitro, carboxylic acid, the non-hydrogen groups optionally substituted with one or more moieties selected from the group consisting of C₁-C₂₀ alkyl, C₁-C₂₀ alkoxy and aryl, wherein Rₒ₁, Rₒ₂, Rₘ₁, Rₘ₂ and Rₚ can be joined to form a fused cyclic aliphatic or aromatic ring optionally substituted with one or more moieties selected from the group consisting of hydrogen, C₁-C₂₀ alkyl, C₁-C₂₀ heteroalkyl, C₁-C₂₀ alkoxy, aryl, aryloxy, heteroaryl, heterocycloalkyl, disulfide, carbonate, isocyanate, carbodiimide, carboalkoxy, carbamate and halogen, thioether, ketone, aldehyde, ester, ether, amine, amide, nitro, carboxylic acid, the non-hydrogen groups optionally substituted with one or more moieties selected from the group consisting of C₁-C₂₀ alkyl, C₁-C₂₀ alkoxy and aryl comprising the following steps according to variant A or B:

### variant A

(i) reacting a compound of the formula (II) 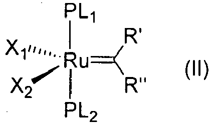 wherein PL₁ and PL₂ are the same or different and each denote a phosphine ligand, R' and R" are as defined above, and X₁ and X₂ may be the same or different and each denote an anionic ligand with a compound of the formula (III) 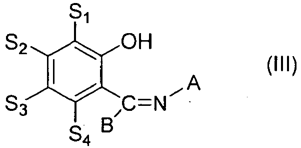 wherein A and B are as defined above and S₁ to S₄ are substituents which are selected which are selected from the group consisting of hydrogen, nitro, ammonium, halogen, substituted or unsubstituted amino, mono- and dialkylamino, C₁-C₂₀ alkyl, C₁-C₂₀ alkoxy, thioalkyl, aryl, aryloxy, piperidinyl, 1-pyrrolidino and 2-pyridyl such that the compound of the formula (III) has a pKₐ ≥ 6.2 in the presence of a weak base having a pK_{b} in the range of 3.5 - 7.0 to obtain a compound of the formula (IV) 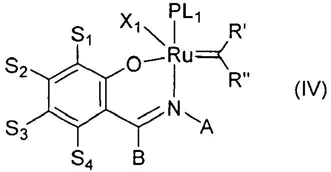 wherein PL₁ S₁ to S₄, A, B,X₁, R' and R" are as defined above,
(ii) reacting the compound of formula (IV) with a precursor of a non-phosphine neutral electron donor ligand to obtain catalyst (I) or

### variant B

(i) reacting a compound of the formula (V) 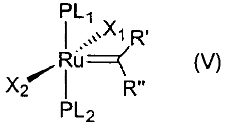 wherein PL₁, PL₂, X₁,X₂, R' and R" are as defined above with a precursor of a non-phosphine ligand L₁ as defined above to obtain a compound of the formula (VI) 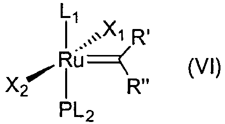 wherein L₁, PL₂, X₁, X₂, R' and R" are as defined above and
(ii) reacting the compound of formula (VI) with a compound of the formula (III) 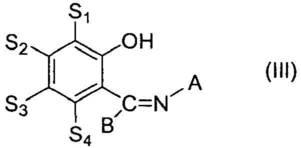
wherein S₁ to S₄, A and B are as defined above in the presence of a weak base having a pK_{b} in the range of 3.5 - 7.0.

### Detailed description of the invention

The present invention is based on the surprising discovery that the successful complexation of the salicylaldimine ligand having a pKₐ ≥ 6.2 with ruthenium is possible in the presence of a weak base such as Ag₂CO₃, for example, in order to prepare ruthenium catalysts of formula (I).

The NMR analysis of the reaction mixture obtained when carrying out the process according to the present invention shows that the complexation proceeds through several intermediate complexes which gradually disappear during the reaction, which has not been observed in any case for the benzylidene analogues. The complexation utilising Ag₂CO₃ as a weak base, for example, provides excellent yields in the range of 90-98%, which is highly superior to the yield obtained using thallium(I) salts.

This is shown in an exemplary manner in Scheme 4 below:

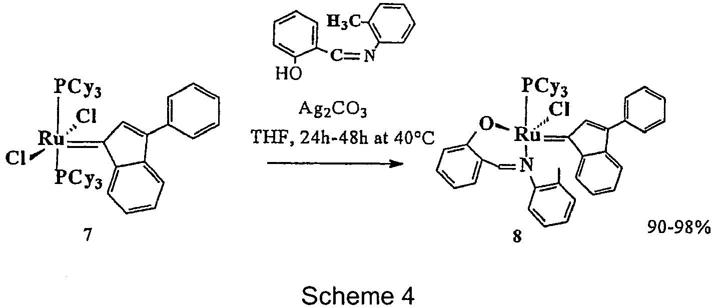

The process according to the present invention can be carried out in two ways:
In the first variant (variant A), a compound of the formula (II) 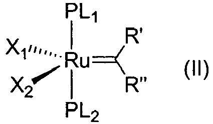 is reacted with a compound of the formula (III) 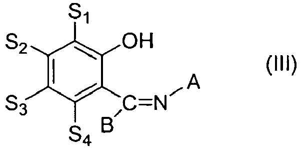 in the presence of a weak base to obtain a compound of the formula (IV)

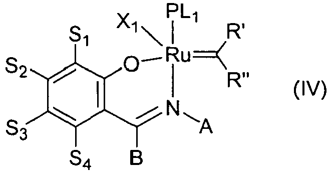

This step is exemplified in Scheme 4 above.

In the next step of variant A, the phosphine ligand in the compound of the formula (8) is replaced by a non-phosphine neutral electron donor ligand such as a sterically more complex N-heterocyclic ligand e.g. SIMes or IMes ligand.

According to variant (B) of the process according to the present invention, the replacement of the phosphine ligand with a non-phosphine ligand L₁ occurs already in the first step. Thus, according to variant (B), a compound of the formula (V) 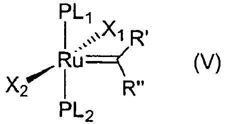 is reacted with a precursor of a non-phosphine ligand L₁ first to obtain a compound of the formula (VI) 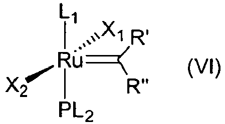 and the salicylaldimine ligand of the formula (III) 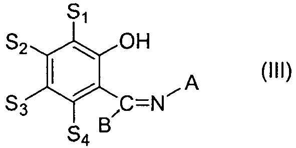 is only introduced in the next step in the presence of the weak base, such as Ag₂CO₃, for example, to prepare the desired bidentate Schiff base ruthenium catalyst.

In variant A, the replacement of the strong σ-donating phosphine ligand by a sterically more complex non-phosphine ligand such as a N-Heterocyclic ligand, e.g. SIMes ligand can surprisingly be achieved.

The *in situ* methods for preparation of SIMes containing ruthenium catalysts, in which all ingredients, that is, a SIMes ligand precursor, such as complex 7, for example, and a strong base are mixed together in an appropriate solvent (THF, benzene, toluene or hexane) lead to undesired results, such as diminished yields and formation of significant amounts of by-products. At least one of the contaminants is a ruthenium hydride or alkoxide species, which may be responsible for various side reactions. Treatment of 2 equiv of SIMes-CI and 2 equiv of LiHMDS in toluene at 40°C leads first to the formation of a second generation of indenylidene catalyst, bearing the PCy₃ moiety, which can be explained by ligand metathesis leading to bis-chloride-Ruthenium complex and decoordination of imine salt. The "base free" methods involving the use of SIMes adducts such as: chloroform adduct, CO₂SIMes, Ag(SIMes)CI, which requires higher temperature (80°C), fail due to low thermal stability of complex **8.**

However, according to the present invention, the complex **10,** for example, can be obtained successfully by reaction of complex **8** with 3-4 equivalents of SIMes in hexane at 50°C, (Scheme 5). After the solvent is filtered off and remaining solid is washed several times with hexane, complex **10** can be isolated as a dark microcrystalline solid in 81% yield and with high purity.

Thus, the process according to the present invention can be carried out as a good yielding quasi-one pot process which is exemplified in Scheme 5 below (here, R' and R" together form a phenylindenylidene moiety):

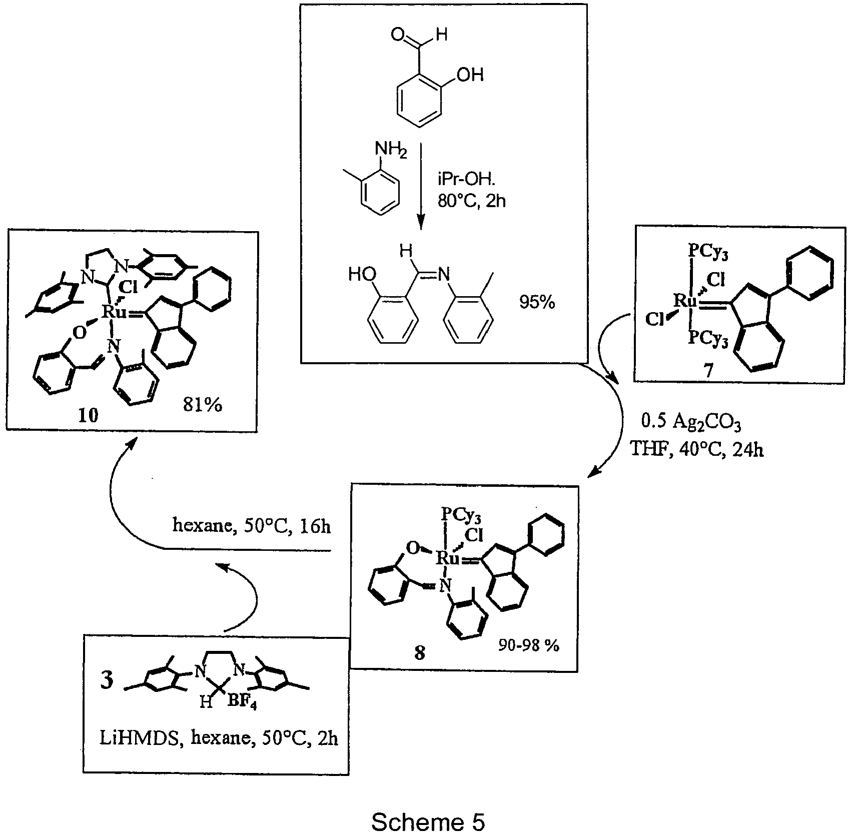

As the compounds used in the process according to the present invention are sensitive to air, moisture and impurities, it should be made sure that the starting material, the reagents and solvents used contain no impurities and are well dried. For example, in the reaction shown in Scheme 5 above, the quality of the SIMes-BF₄ salt is important to obtain the optimum results. Preferably, a salt is used which has been prepared according to the method by Hoveyda, recrystallised from ethanol (99.8%) and dried under vacuum.

Variant (B) of the process according to the present invention is exemplified in Scheme 6 below. The first step is the substitution of one phosphine ligand by free SIMes, resulting in a mixed complex **11.** The second step comprises the coordination of the salicylaldimine ligand by substituting the remaining phosphine ligand and one of the two chloro ligands. Noteworthy this protocol does not require the synthesis of a pyridine complex, nor any further purification. This procedure is highly superior compared to the previously described one using a NHC-pyridine complex and a thallium salt.

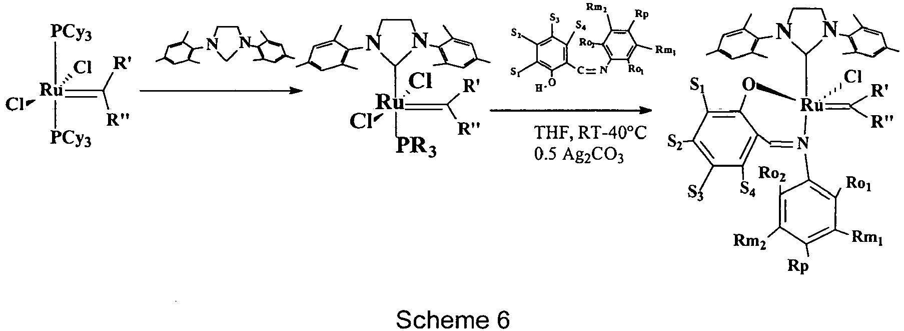

As mentioned above, one of the key features of the process according to the present invention is the successful complexation of ruthenium with the salicylaldimine ligand having a pKₐ ≥ 6.2 in the presence of a weak base.

As used herein, the terms below have the meanings indicated.

The parameter pKₐ is based on the so-called acid dissociation constant (denoted Kₐ) which is the equilibrium constant for the dissociation of a weak acid. According to the Brønsted-Lewis theory of acids and bases, an acid is a proton donor (HA, where H represents an acidic hydrogen atom), and a base is a proton acceptor. In aqueous solution, water can function as a base, as in the following general example.

HA + H₂O ⇄ A⁻ + H₃O⁺

Acid dissociation constants are also known as the **acidity constant** or the **acidionization constant.** The term is also used for pKₐ, which is equal to the negative decimal logarithm of Kₐ (cologarithm of Kₐ).

In the present invention, the pKₐ value is determined by using Advanced Chemistry Development (ACD/Labs) Software, such as software V8.14 for Solaris referenced in J. Org. Chem. 2007, 72, 3561-3564.

The ACD/pKₐ DB software uses Hammett equations derived from a library of compounds to calculate the aqueous pKₐ. In addition, two reference databases are available - one contains > 31,000 experimental pKₐ values for approximately 16,000 compounds in aqueous solutions; the other provides experimental data for more than 2000 molecules in non-aqueous solvents. This software is used by the majority of pharmaceutical and API companies worldwide, and has been tested on a broad variety of chemical classes.

The salicylaldimine ligand of formula (III) used in the present invention has a pKₐ ≥ 6.2 which is above the pKₐ of 5.81 ± 0.30 mentioned by Bjørsvik in J. Org. Chem. 2007, 72, 3561-3564 for a complexation resulting in tiny yields (2%).

According to the present invention, a complexation can be achieved in high yields even when using salicylaldimine ligands having a pKₐ as high as 11.

The pKₐ of the salicylaldimine ligand is basically determined by the nature of the substituents S₁ to S₄. It is common general knowledge that electron-withdrawing groups (such as the nitro groups described in the above mentioned paper by Bjørsvik) will decrease the pKₐ of the phenolic group whereas electron-neutral (hydrogen) or electron-donating groups will increase the pKₐ.

Suitable electron-donating groups are known to the skilled person and include substituted or unsubstituted amino, mono- and dialkylamino, C₁-C₂₀ alkoxy, C₁-C₂₀ alkyl, thioalkyl, aryl, aryloxy and the like.

Examples include methoxy, methyl, isopropyl, t-butyl and dimethylamino.

On the basis of these lists of electron-neutral/-donating groups, the skilled person can easily conceive compounds of formula (III) having a pKₐ ≥ 6.2.

The presence of electron-withdrawing groups is not excluded provided that the corresponding phenols have a pKₐ ≥ 6.2. For example, such electron-withdrawing groups include ammonium, nitro, halogen, such as bromo, chloro, fluoro, iodo and the like.

The following Table 1 lists pKₐ values for various phenolic Schiff base ligand compounds:

**Table 1**

| **Phenolic part** | | | | | **Aniline part** | | | | | **pKa** |
|---|---|---|---|---|---|---|---|---|---|---|
| **No** | **S¹** | **S²** | **S³** | **S⁴** | **Rₒ₁** | **Rₒ₂** | **Rₘ₁** | **Rₘ₂** | **Rₚ** | |
| **pKa 7.22-11.08** | | | | | | | | | | |
| 1 | H | H | tbPhO³* | H | -CH₃ | H | H | H | H | 8.95 |
| 2 | H | H | Pyr²* | H | -CH₃ | H | H | H | H | 9.51 |
| 3 | H | H | Py⁴* | H | H | H | H | H | H | 7.14 |
| 4 | H | H | Pip¹* | H | -CH₃ | H | H | H | H | 11.08 |
| 5 | H | Pip^{1*} | H | Pip^{1*} | -CH₃ | H | H | H | H | 9.55 |
| 6 | H | Pip^{1*} | H | H | -CH₃ | H | H | H | H | 9.17 |
| 7 | Pip¹* | H | H | H | -CH₃ | H | H | H | H | 10.05 |
| .8 | OCH₃ | H | -OCH₃ | H | -CH₃ | -CH₃ | H | H | H | 9.25 |
| 9 | OCH₃ | H | -OCH₃ | H | -CH₃ | H | H | H | H | 9.24 |
| 10 | OCH₃ | H | -OCH₃ | H | -CH₃ | -CH₃ | H | H | -CH₃ | 9.32 |
| 11 | OCH₃ | H | -OCH₃ | OCH₃ | -CH₃ | -CH₃ | H | H | -CH₃ | 8.93 |
| 12 | H | H | H | H | -OCH₃ | H | H | H | H | 8.87 |
| 13 | H | H | H | H | -CH₃ | -CH₃ | H | H | H | 8.85 |
| 14 | H | H | H | H | -Cl | H | H | H | H | 8.58 |
| 15 | H | H | H | H | -CH₃ | -CH₃ | H | H | -CH₃ | 8.84 |
| 16 | H | H | H | H | -CH₃ | -CH₃ | H | H | -Br | 8.69 |
| 17 | H | H | H | H | -ⁱPr | -ⁱPr | H | H | H | 8.83 |
| 18 | H | H | H | H | H | H | H | H | -^{t}But | 8.92 |
| 19 | H | H | H | H | H | H | H | H | H | 8.47 |
| 20 | H | H | H | H | H | H | H | H | -^{t}But | 8.92 |
| 21 | H | H | H | H | H | H | -Br | H | H | 8.76 |
| 22 | H | H | H | H | -CH₃ | H | H | H | H | 8.93 |
| 23 | H | H | H | H | -^{t}But | -^{t}But | H | H | -^{t}But | 8.93 |
| 24 | H | H | H | H | H | H | H | H | H | 8.47 |
| 25 | H | H | -OCH₃ | H | -CH₃ | H | H | H | H | 9.24 |
| 26 | H | H | -OCH₃ | H | H | H | H | H | -^{t}But | 9.32 |
| 27 | H | H | -OCH₃ | H | -CH₃ | -CH₃ | H | H | -CH₃ | 9.33 |
| 28 | H | H | -OCH₃ | H | -CH₃ | -CH₃ | H | H | H | 9.25 |
| 29 | H | -OCH₃ | H | H | -CH₃ | H | H | H | H | 8.38 |
| 30 | H | -OCH₃ | H | H | -^{t}But | -^{t}But | H | H | -^{t}But | 8.47 |
| 31 | H | -OCH₃ | H | | H | H | H | H | -^{t}But | 8.45 |
| 32 | H | -OCH₃ | H | OCH₃ | H | H | H | H | -^{t}But | 8.05 |
| 33 | H | -OCH₃ | H | | -CH₃ | -CH₃ | H | H | H | 8.39 |
| 34 | H | -OCH₃ | H | | -CH₃ | -CH₃ | H | H | -CH₃ | 8.46 |
| 35 | H | -OCH₃ | H | | Cl | H | H | H | H | 8.12 |
| 36 | H | -OCH₃ | H | | Cl | H | H | H | -OCH₃ | 8.47 |
| 37 | H | -OCH₃ | H | OCH₃ | -CH₃ | -CH₃ | H | H | -CH₃ | 8.06 |
| 38 | H | -SCH₃ | H | H | -CH₃ | H | H | H | H | 8.27 |
| 39 | H | -SCH₃ | H | -SCH₃ | -CH₃ | H | H | H | H | 7.75 |
| 40 | H | NH₂ | H | H | -CH₃ | H | H | H | H | 8.81 |
| 41 | H | NH₂ | H | NH₂ | -CH₃ | H | H | H | H | 8.83 |
| 42 | H | NH₂ | H | NH₂ | H | H | H | H | -CH₃ | 8.91 |
| 43 | OCH₃ | H | H | H | -CH₃ | -CH₃ | H | H | H | 8.77 |
| 44 | H | -Br | H | H | H | H | H | H | H | 7.37 |
| 45 | H | -Br | H | H | -CH₃ | H | H | H | H | 7.79 |
| 46 | H | -Br | H | -Br | -CH₃ | H | H | H | H | 6.80 |
| 47 | H | H | H | H | H | H | -Cl | H | H | 8.67 |
| 48 | -Br | H | H | H | -CH₃ | H | H | H | H | 7.22 |
| 49 | H | H | -Cl | H | -CH₃ | H | H | H | H | 8.87 |
| 50 | H | -Cl | -Cy | H | H | H | H | H | -CH₃ | 7.58 |
| 51 | H | -Cl | -Cy | H | -CH₃ | H | H | H | H | 7.51 |
| 52 | H | H | -Br | H | -CH₃ | H | H | H | H | 8.19 |
| 53 | H | H | -F | H | -CH₃ | H | H | H | H | 8.77 |
| 54 | -^{t}But | H | -^{t}But | H | -CH₃ | H | H | H | H | 10.34 |
| 55 | -^{t}But | H | -^{t}But | H | -CH₃ | -CH₃ | H | H | -CH₃ | 10.42 |
| 56 | -^{t}But | H | -^{t}But | H | -^{t}But | -^{t}But | H | H | -^{t}But | 10.43 |
| 57 | -^{t}But | H | -^{t}But | -^{t}But | H | H | H | H | -CH₃ | 10.53 |
| 58 | -^{t}But | H | Cy | H | -CH₃ | H | H | H | H | 10.36 |
| 59 | -^{t}But | H | H | H | -CH₃ | -CH₃ | H | H | -CH₃ | 10.22 |
| 60 | -^{t}But | H | H | Cl | -CH₃ | H | H | H | H | 9.14 |
| 61 | -^{t}But | H | Cy | Cl | -CH₃ | H | H | H | H | 9.39 |
| 62 | H | -^{t}But | H | H | -CH₃ | H | H | H | H | 8.86 |
| 63 | H | -^{t}But | H | H | -^{t}But | -^{t}But | H | H | -^{t}But | 8.97 |
| 64 | H | -^{t}But | H | H | -CH₃ | -CH₃ | H | H | -CH₃ | 8.97 |
| 65 | H | -^{t}But | H | H | H | H | H | H | -^{t}But | 8.95 |
| 66 | H | -^{t}But | H | -^{t}But | H | H | H | H | -CH₃ | 9.05 |
| 67 | H | H | -N(CH₃)₂ | H | -CH₃ | H | H | H | H | 7.85 |
| 68 | H | H | -N(CH₃)₂ | H | -CH₃ | -CH₃ | H | H | H | 8.86 |
| 69 | H | N(CH₃)₂ | H | H | -CH₃ | H | H | H | H | 8.86 |
| 48 | H | N(CH₃)₂ | H | H | -CH₃ | -CH₃ | H | H | H | 8.86 |
| 70 | H | *N(CH₃)₃* | H | H | -CH₃ | H | H | H | H | 6.64 |
| 71 | H | N(CH₃)₂ | H | H | Ipr | Ipr | H | H | H | 8.84 |
| 72 | H | H | -OCF₃ | H | -CH₃ | H | H | H | H | 8.14 |
| 73 | H | H | -CF₃ | H | -CH₃ | H | H | H | H | 7.36 |
| 74 | H | -CF₃ | H | H | -CH₃ | H | H | H | H | 7.75 |
| 75 | H | OPh | H | H | -CH₃ | H | H | H | H | 8.09 |
| 76 | H | OPh | H | OPh | -CH₃ | H | H | H | H | 7.39 |
| 91 | H | H | Ph | H | -CH₃ | -CH₃ | H | H | -CH₃ | 5.95 |
| 92 | H | Ph | H | H | -CH₃ | -CH₃ | H | H | -CH₃ | 8.53 |
| 93 | H | Ph | H | Ph | -CH₃ | H | H | H | H | 8.29 |
| 94 | Ph | H | Ph | H | -CH₃ | H | H | H | H | 8.68 |
| 95 | H | H | Ph | H | -CH₃ | -CH₃ | H | H | -CH₃ | 8.66 |

| **pKa 6.36-6.95** | | | | | | | | | | |
|---|---|---|---|---|---|---|---|---|---|---|
| 96 | -Br | H | -Br | H | -CH₃ | H | H | H | H | 6.64 |
| 97 | -Cl | H | Cl | H | -CH₃ | H | H | H | H | 6.80 |
| 98 | H | | H | -Br | -CH₃ | -CH₃ | H | H | -CH₃ | 6.89 |
| 99 | H | NO₂ | H | H | -CH₃ | -CH₃ | H | H | H | 6.95 |
| 100 | H | NO₂ | H | H | -CH₃ | H | H | H | H | 6.95 |
| 101 | H | NO₂ | H | H | Cl | H | H | H | H | 6.61 |
| 102 | H | NO₂ | H | H | -CH₃ | H | H | H | H | 7.04 |
| 103 | H | NO₂ | H | H | -CH₃ | H | H | H | H | 7.04 |
| 104 | H | NO₂ | H | H | H | H | H | H | NO₂ | 6.36 |
| 105 | OCF₃ | H | H | H | -CH₃ | H | H | H | H | 6.88 |
| 106 | -CF₃ | H | H | H | -CH₃ | H | H | H | H | 6.77 |
| 107 | H | -CF₃ | H | -CF₃ | -CH₃ | H | H | H | H | 6.72 |

| **4.89-5.95** | | | | | | | | | | |
|---|---|---|---|---|---|---|---|---|---|---|
| 108 | H | NO₂ | H | NO₂ | -CH₃ | H | H | H | H | 5.42 |
| 109 | F | F | F | F | -CH₃ | H | H | H | H | 5.50 |
| 110 | Cl | Cl | Cl | Cl | -CH₃ | H | H | H | H | 4.89 |
| 111 | H | H | NO₂ | | -^{t}But | -^{t}But | H | H | -^{t}But | 5.89 |
| 112 | H | H | NO₂ | | -^{t}But | H | H | H | H | 5.82 |
| 113 | H | H | NO₂ | | ⁱPr | ⁱPr | H | H | H | 5.81 |
| 114 | H | H | NO₂ | | -CH₃ | -CH₃ | H | H | H | 5.83 |
| 115 | H | H | NO₂ | | -CH₃ | H | H | H | H | 5.82 |
| 116 | H | H | NO₂ | | -CH₃ | -CH₃ | H | H | | 5.72 |
| 117 | H | H | NO₂ | | -CH₃ | -CH₃ | H | H | -CH₃ | 5.89 |
| 118 | H | H | NO₂ | | -Cl | H | H | H | H | 5.63 |
| 119 | H | H | NO₂ | | H | H | H | H | H | 5.55 |
| 120 | H | H | NO₂ | | H | H | -Br | H | H | 5.77 |
| 121 | H | H | NO₂ | | H | H | H | H | -Cl | 5.71 |
| 122 | H | H | NO₂ | | H | H | H | H | -CH₃ | 5.88 |
| 123 | H | H | NO₂ | | H | H | H | H | -^{t}But | 5.88 |
| 124 | H | H | NO₂ | | H | H | H | H | -N(CH₃)₂ | 5.88 |

| | | | | | | | | | | |
|---|---|---|---|---|---|---|---|---|---|---|
| ¹ (Pip= Piperidinyl) ² (Pyrl= 1-Pyrrolidino) ³ (tbPhO= 4-*tert*-Butylphenoxy) ⁴(Py=2-Pyridyl) | | | | | | | | | | |

Entries No. 1 to 107 have a pKₐ ≥ 6.2 and hence are suitable for use in the present invention.

Entries No. 108 to 124 have a pKₐ lower than 6.2 and their use is not according to the invention.

It is worth noting that it was not possible to obtain bidentate Schiff base ruthenium catalysts when using the above phenolic compounds having a pKₐ lower than 6 in an attempt to prepare indenylidene type catalysts rather than the benzylidene type catalysts described by Bjørsvik. Apparently, the method disclosed by Bjørsvik is limited to the preparation of benzylidene type catalysts even when salicylaldimine ligands are used having a pKₐ in the range of 5.8.

On the other hand, according to the present invention, indenylidene type bidentate Schiff base ruthenium catalysts can be obtained in good yields using phenolic compounds of formula (III) having a pKₐ ≥ 6.2, preferably ≥ 7.2, more preferably ≥ 7.5, still more preferably ≥ 7.8 and most preferably in the range of 8.4 to 10.3.

However, even compounds having a pKₐ as high as 12, 12.5, 13 or even 15 can successfully be used in the process according to the present invention.

Next, the pK_{b} value will be explained:
A weak base is a base that does not ionize fully in an aqueous solution. As Bronsted-Lowry bases are proton acceptors, a weak base may also be defined as a base in which protonation is incomplete. This results in a relatively low pH value compared to strong bases. Bases have a pH in an aqueous solution of greater than 7 (7 is neutral, like pure water) to 14 (though some bases have pH values greater than 14). The pH value is defined as:

   pH = - log₁₀ [H⁺]

Since bases are proton acceptors, the base receives a hydrogen ion from water, H₂O, and the remaining H⁺ concentration in the solution determines the pH value. Weak bases will cause a higher H⁺ concentration because they are less protonated than stronger bases and, therefore, more hydrogen ions remain in the solution. If the H⁺ concentration is increased in the formula, a low pH value results. However, the pH value of bases is usually calculated using the OH-concentration to find the pOH value first. This is done because the H⁺ concentration is not a part of the reaction, while the OH- concentration is.

pOH = - log₁₀ [OH⁻]

Since

K_{w} = [H₃O⁺][OH⁻] then, Kₐ x K_{b} = K_{w}.

By taking logarithms of both sides of the equation, the following is reached:

logKₐ + logK_{b} = logK_{w}

Finally, multiplying throughout the equation by -1, the equation turns into:

pKₐ+ pK_{b}=pK_{w}= 14.00

After calculating the pOH from the above pOH formula, the pH value can be calculated using the formula

pH = pK_{w} - pOH,

wherein pKw = 14.00 at a temperature of 25°C

The weak base used in the present invention is characterised by its pK_{b} value as defined above. Suitable weak bases for use in the present invention have a pK_{b} value in the range of 3.5 to 7.

For example, Ag₂CO₃ has a pK_{b} value of 3.68 in water, wherein the following equilibrium is formed:

Ag₂CO₃ → 2 Ag⁺ + CO₃⁻²

CO₃⁻²+H₂O ↔ HCO₃⁻² + OH⁻

Examples of other suitable bases for use in the present invention include Li₂CO₃, Na₂CO₃, K₂CO₃ and CuCO₃. The pK_{b} of these carbonates is about 3.69.

Further examples include carboxylates.

An anionic ligand (X₁, X₂) is any ligand which, when removed from a metal centre in its closed shell electron configuration, has a negative charge.

Suitable anionic ligand precursors include, but are not limited to, halides, carboxylic acids and/or their alkali metal or other salts, for example, sodium acetate, trifluoroacetate, beta-diketonates, acetylacetonate, propionate, butyrate, benzoate, or their corresponding acids; carboxylic acids and/or their alkali metal or other salts in a position alpha to a heteroaromatic nitrogen atom, such as, but not limited to, picolinic acid and substituted picolinic acids; picolinate and substituted picolinates, and their corresponding N-oxides. Suitable substituents for picolinic acid and picolinate include, but are not limited to, carboxylic acid, carboxylate, halogen, alkyl, heteroaryl, and aryl. Examples of beta-diketones (from which beta-diketonates are derived) include, but are not limited to, acetylace-tone, benzoylacetone, dibenzoylmethane, diisobutyrylmethane, 2,2-dimethylheptane-3,5-dione, 2,2,6-trimethylheptane-3,5-dione, dipivaloyl-methane, trifluoroacetylacetone, hexafluoroacetylacetone, benzoyltrifluoro-acetone, pivaloyl-trifluoroacetone, heptafluorodimethyloctanedione, octafluoro-hexanedione, decafluoroheptanedione, 2-furoyltrifluoroacetone, 2-thionyltrifluoroacetone, 3-chloro-2,4-pentanedione, 3-ethyl-2,4-pentanedione, 3-methyl-2,4-pentanedione, methyl 4-acetyl-5-oxohexanoate. Preferably, X₁ and X₂ are the same and denote chlorine.

A neutral electron donor (L₁, L₂) is any non-phosphine ligand which, when removed from a metal centre in its closed shell electron configuration, has a neutral charge, i.e., is a Lewis base.

Examples of neutral electron donor ligands L₁ include ligands which are derived, for example, from unsubstituted or substituted heteroarenes such as furan, thiophene, pyrrole, pyridine, bipyridine, picolylimine, gamma-pyran, gamma-thiopyran, phenanthroline, pyrimidine, bipyrimidine, pyrazine, indole, coumarone, thionaphthene, carbazole, dibenzofuran, dibenzothiophene, pyrazole, imidazole, benzimidazole, oxazole, thiazole, dithiazole, isoxazole, isothiazole, quinoline, bisquinoline, isoquinoline, bisisoquinoline, acridine, chromene, phenazine, phenoxazine, phenothiazine, triazine, thianthrene, purine, bisimidazole and bisoxazole.

Particularly preferred neutral electron donors for use in the present invention include N-heterocyclic carbene (NHC) ligands. A wide range of NHC ligands are now commercially available. Suitable precursors of such neutral electron donor ligands include 1,3-diisopropylimidazolium tetrafluoroborate, 1,3-bis(1-adamantanyl)imidazolium tetrafluoroborate, 1,3-Bis-(tert-butyl)-4,5-dihydro-1H-imidazolium tetrafluoroborate, N,N'-(2,4,6-trimethyl)dihydroimidazolium chloride and N,N'-(2,6-diisopropylphenyl)dihydroimidazolium chloride, 1,3-bis(2,4,6-trimethylphenyl)-4,5-dihydroimidazolium tetrafluoroborate (SIMes·BF₄), 1,3-bis(2,4-dimethylphenyl)-4,5-dihydroimidazolium tetrafluoroborate (SIMe·BF₄); 1,3-bis(2-methylphenyl)-4,5-dihydroimidazolium tetrafluoroborate, 1,3-bis(2-butylphenyl)-4,5-dihydroimidazolium tetrafluroborate, 1-methyl-3-(2,4,6-trimethylphenyl)-4,5-dihydroimidazolium tetrafluoroborate, 1-cyclohexyl-3-(2,4,6-trimethylphenyl)-4,5-dihydroimidazolium tetrafluoroborate, 1-octyl-3-(2,4,6-trimethylphenyl)-4,5-dihydroimidazolium tetrafluoroborate, 1-(1-adamantyl)-3-(2,4,6-trimethylphenyl)-4,5-dihydroimidazolium tetrafluoroborate.

Examples of phosphine ligands PL₁ and PL₂ include phospines of the formula PR₃R₄R₅, where R₃, R₄ and R₅ are selected from C₁-C₁₀ primary alkyl, secondary alkyl or cycloalkyl, alkoxy aryl, aryloxy. R₃, R₄ and R₅ may be the same or different.

The term "aryl" includes a mono- and polyaromatic monovalent radical such as phenyl, benzyl, naphthyl, anthracenyl, adamantyl, phenantracyl, fluoranthenyl, chrysenyl, pyrenyl, biphenylyl, picenyl and the like, including fused benzo-C₅₋₈ cycloalkyl radicals such as, for instance, indanyl, 1,2,3,4-tetrahydronaphtalenyl, fluorenyl and the like.

The term "heteroaryl" includes a mono- and polyheteroaromatic monovalent radical including one or more heteroatoms each independently selected from the group consisting of nitrogen, oxygen, sulfur and phosphorus, such as for instance pyridyl, pyrazinyl, pyrimidinyl, pyridazinyl, triazinyl, triazolyl, imidazolyl, pyrazolyl, thiazolyl, isothiazolyl, oxazolyl, pyrrolyl, furyl, thienyl, indolyl, indazolyl, benzofuryl, benzothienyl, quinolyl, quinazolinyl, quinoxalinyl, carbazolyl, phenoxazinyl, phenothiazinyl, xanthenyl, purinyl, benzothienyl, naphtothienyl, thianthrenyl, pyranyl, isobenzofuranyl, chromenyl, phenoxathiinyl, indolizinyl, quinolizinyl, isoquinolyl, phthalazinyl, naphthiridinyl, cinnolinyl, pteridinyl, carbolinyl, acridinyl, perimidinyl, phenanthrolinyl, phenazinyl, phenothiazinyl, imidazolinyl, imidazolidinyl, pyrazolinyl, pyrazolidinyl, pyrrolinyl, pyrrolidinyl and the like, including all possible isomeric forms thereof.

The term "cycloalkyl" includes a monocyclic aliphatic radical having from 3 to 8 carbon atoms, such as for instance cyclopropyl, cyclobutyl, methylcyclobutyl, cyclopentyl, methylcyclopentyl, cyclohexyl, methylcyclohexyl, cycloheptyl, cyclooctyl and the like, or a C₇₋₁₀ polycyclic aliphatic radical having from 7 to 10 carbon atoms such as, for instance, norbornyl or adamantyl.

As used herein, the term alkyl includes straight and branched chain saturated hydrocarbon monovalent radicals having from 1 to 6 carbon atoms such as, for example, methyl, ethyl, propyl, n-butyl, 1-methylethyl, 2-methylpropyl, 1,1-dimethylethyl, 2-methylbutyl, n-pentyl, dimethylpropyl, n-hexyl, 2-methylpentyl, 3-methylpentyl and the like, and the higher homologues thereof having 7 to 20 carbon atoms, such as for instance heptyl, ethylhexyl, octyl, nonyl, decyl, dodecyl, octadecyl and the like.

The term "heteroalkyl" denotes an alkyl group as defined above wherein one or more carbon atoms may be replaced by heteroatoms such as nitrogen, phosphorus, oxygen, sulfur and the like.

The term "heterocycloalkyl" denotes a cycloalkyl group as defined above wherein one or more carbon atoms may be replaced by heteroatoms such as nitrogen, phosphorus, oxygen, sulfur and the like.

Unless indicated otherwise, the term "substituted" refers to substituents selected from the group consisting of C₁-C₂₀ alkyl, C₁-C₂₀ heteroalkyl, C₁-C₂₀ alkoxy, aryl, aryloxy, heteroaryl, heterocycloalkyl, disulfide, carbonate, isocyanate, carbodiimide, carboalkoxy, carbamate and halogen, thioether, ketone, aldehyde, ester, ether, amine, amide, nitro, carboxylic acid, the non-hydrogen groups optionally substituted with one or more moieties selected from the group consisting of C₁-C₂₀ alkyl, C₁-C₂₀ alkoxy and aryl.

According to a preferred embodiment of the invention, a catalytic quantity of silver(I) chloride is added to the reaction mixture.

The amount of weak base used is generally in the range of 1 to 2 equivalents relative to the amount of compound (III).

The starting metal complex, the Schiff base ligands, the weak base, such as Ag₂CO₃ and, optionally, silver(I) chloride are preferably pre-mixed and then a suitable solvent that does not react with any components of the mixture is added. In the present invention, aprotic solvents which do not possess any acidic protons having a dielectric constant above 3 are preferably used.

Generally, the dielectric constant of the solvent provides a rough measure of a solvent's polarity. Solvents with a dielectric constant of less than 15 are generally considered nonpolar. Technically, the dielectric constant measures the solvent's ability to reduce the field strength of the electric field surrounding a charged particle immersed in it. Examples are given in Table 2 below:

| **Table 2** | |
|---|---|
| solvent | **dielectric constant**^{**(**1**)**} |
| hexane | 1.89 at 20°C |
| tetrahydrofuran | **7.52 at 25°C** |
| CH₂Cl₂ | **8.93 at 25°C** |
| acetone | 21.01 at 20°C |
| chloroform | **4.81 at 20°C** |
| toluene | 2.38 at 23°C |
| benzene | 2.28 at 23°C |
| diethyl ether | **4.34 at 25°C** |
| ⁽¹⁾ Solvent Physical Properties. Sigma-Aldrich. Retrieved on 23 May 2007. | |

As mentioned above, the preferred solvent for use in the present invention has a dielectric constant above 3 and such solvents include tetrahydrofuran, CH₂Cl₂, chloroform and diethyl ether, with tetrahydrofuran being particularly preferred.

The reaction mixture is then heated and stirred. In general, the reaction is carried out at a temperature in the range of 20-60°C.

The reaction time is in general 2 to 72 h.

After the reaction has been completed, the reaction mixture is cooled to about 0°C to remove any by-products formed such as PCy₃AgCl by filtration.

Subsequently, the solvent is removed by evaporation, usually under reduced pressure.

The ratio of the compound of the formula (II) to the salicylaldimine ligand (III) used in step (i) of variant A is preferably equimolar.

The ratio of the compound of the formula (V) to the precursor of a non-phosphine ligand L₁ used in step (i) of variant B is preferably about 1-3 equivalents.

The ratio of the compound of the compound of formula (VI) to the salicylaldimine ligand used in step (ii) of variant B is preferably about 1:1.

In a preferred embodiment of the process according to the present invention Rₒ₁ is a methyl group and Rₒ₂ and Rₚ are simultaneously hydrogen.

According to another preferred embodiment, Rₒ₁ and Rₒ₂ are methyl groups and Rₚ is hydrogen.

According to another preferred embodiment, Rₒ₁ and Rₒ₂ are methyl and Rₚ is methyl or bromide.

Still according to another preferred embodiment, Rₒ₁ is methyl, Rₒ₂ and Rₚ are both hydrogen, L₁ is SIMes or IMes and X₁ is chloride.

Still according to another preferred embodiment, Rₒ₁ and Rₒ₂ are both methyl, Rₚ is hydrogen, L₁ is SIMes or IMes and X₁ is chloride.

According to another preferred embodiment, Rₒ₁ and Rₒ₂ are both methyl, Rₚ is bromide, L₁ is SIMes or IMes and X₁ is chloride. Still according to another preferred embodiment, Rₒ₁ and Rₒ₂ are both hydrogen, Rₚ is tertbutyl, S² is methoxy, L₁ is SIMes_{[0]} and X₁ is chloride.

Still according to another preferred embodiment, Rₒ₁ and Rₒ₂ are both hydrogen, Rp is tertbutyl, S³ is methoxy, L₁ is SIMes and X₁ is chloride.

Thus, according to the present invention, the following catalysts can be prepared in a short, efficient and environmentally benign process avoiding the use of thallium salts:

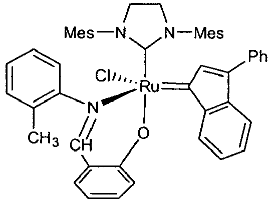

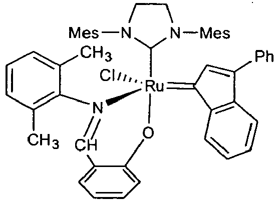

Further, using the process according to the present invention, another subclass of ruthenium metathesis catalysts can be prepared, and preferred examples of this subclass are shown below:

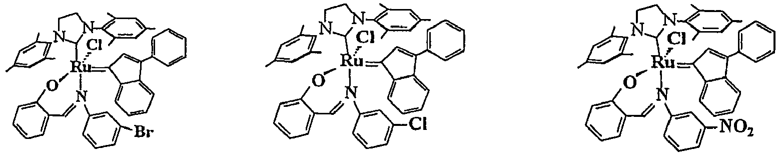

The present invention is further illustrated by the following examples wherein manipulations of oxygen and moisture-sensitive materials were performed using

Schlenk techniques under an argon atmosphere. THF, toluene, or hexane can be used as exemplary solvents.

### General Procedure for the Preparation of Indenylidene-Schiff Base-Ruthenium complexes

The stoichiometric amounts of indenylidene first-generation catalyst (7), the corresponding Schiff base ligand, and silver(1) carbonate were added to a Schlenk flask (50-250 ml). The flask was evacuated and backfilled with argon. Dry THF (20 ml) was then transferred to the Schlenk flask (still under argon) and stirred for a period of 6-72 h. The reaction mixture was cooled at 0°C whereas the white precipitate of PCy₃AgCl (by-product) was removed by filtration. The filtrate was collected in a Schlenk flask (250 ml), and the solvent was removed by evaporation under reduced pressure.

### Example 1

**Complex 8 (Table 1; entry 22):** Indenylidene first-generation catalyst **(7)** (500 mg, 0.54 mmol), 2-[(2-methylphenylimino)methyl]phenol (pKa: 8.93 ± 0.35) (113 mg, 0.54 mmol), silver(I) carbonate (74.48 g, 0.27 mmol), and THF (10 ml) were reacted as described above for 72 h. The reaction mixture was investigated on ¹H and ³¹P NMR, which revealed quantitative transformation to complex **8,** namely 98%, of title complex.
¹H NMR (in dichloromethane-*d*₂, 295 K)
(δ [ppm], multiplicity, intensity, J [Hz], assignment):
8. 38 (d, [1 H], J = 7.4 Hz, H-22); 7.84 (d, [1 H], J = 7.0 Hz, H-7); 7.71 (d, [2H], J = 7.4 Hz, H-25); 7.51 (t, [1 H], J = 7.1 Hz, H-27), 7.40 (d, [1 H], J = 7.5 Hz,H-19); 7.36 (dd, [2H], H-26); 7.30 (dd, [1 H], H-12); 7.26 - 7.21 (unresolved multiplets, [5H]: H-4, H-21, H-9, H-10, H-11);
7.20 (d, [1 H], J = 8.8 Hz, H-5); 7.04 (d, [1 H], J = 8.8 Hz, H-2); 6.88 (s, [1 H], H-16); 6.81 (dd, [1 H], J = 5.5 Hz, H-20); 6.50 (t, [1 H], J = 7.5 Hz, H-3); 2.52 (q, [3H], J = 11.4 Hz, PCy₃); 2.42 (s, 3H, H-14); 1.95-1.54 (m, [20H], CH₂ of PCy₃); 1.30-1.23 (m, [20H], CH₂ of PCy₃).
¹³C NMR: 292.8 (b.s, C-15); 170.5 (s, C-1); 165.3 (s, C-7); 154.3(s, C-8); 140.9 (s, C-18); 139.6 (s, C-17); 136.6 (d, C-16); 136.0 (s, C-2); 133.5 (s, C-4); 131.8 (s, C-23); 131.2 (s, C-13); 130.4 (s, C-13); 129.4 (s, C-12); 129.1 (s, C-19); 129.0 (s, C-26); 128.9 (C-9-11); 128.9 (s, C-21); 128.2 (s, C-22); 128.0 (s, C-27); 127.4 (s, C-24); 126.3 (s, C-25); 125.5 (C-9-11); 124.7 (s, C-20); 122.4 (s, C-5); 117.5 (s, C-6); 117.3 (C-9-11); 114.4 (s, C-3); 33.1 (s, C-14); cyclohexyl resonances: 33.1 (d, J = 19.7 Hz); 29.8 (s); 29.3 (s) ; 27.8 (dd, J¹ = 30 Hz, J¹ = 10 Hz); 26.6 (dd, J¹ = 82 Hz, J¹ = 11 Hz); 26.5 (s).
³¹P NMR: 37.24 ppm (broad singlet)

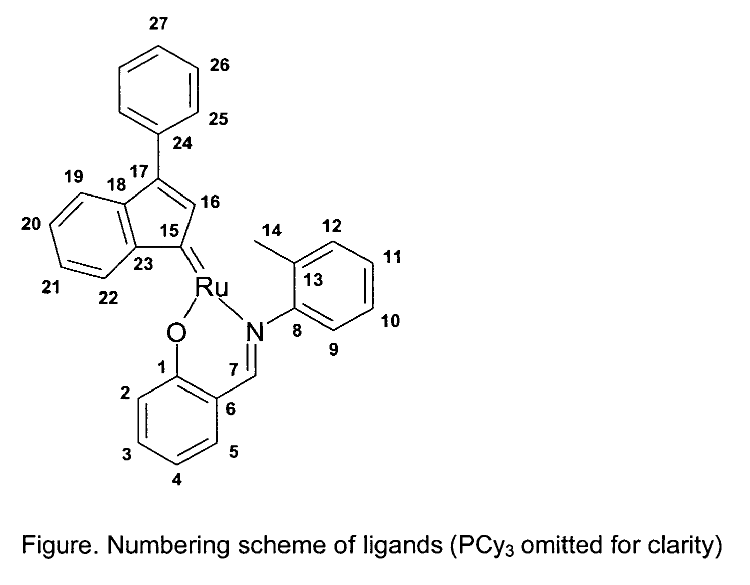

### Structure elucidation

The assignment of resonances in the ¹H, ¹³C, and ³¹P NMR spectra taken in dichloromethane-*d*₂ was performed using 1-D and 2-D homonuclear COSY and NOESY and HSQC and HMBC (¹H-¹³C and ¹H-³¹P) heteronuclear experiments.

The most characteristic features of the ¹H NMR spectrum in dichloromethane-*d*₂ is the presence of singlet resonance of indenylidene H-16 proton at 6.88 ppm (6.85 in CDCl₃), which has been assigned via heteronuclear long-range coupling with carbon C-15 in HMBC experiment. Interestingly the proton H-22 of indenylidene ligand (doublet at 8.38 ppm in CD₂Cl₂, 8.29 ppm in CDCl₃ and multiplet at 8.97 ppm in benzene-*d*₆) showed the same coupling with C-15. These allowed to assign the ¹H and ¹³C signals of indenylidene part of the complex through homonuclear COSY/NOESY and heteronuclear HSQC/HMBC couplings.

The ¹H NMR spectrum of Schiff base ligand is more complicated due to overlapping of salicylidene proton as well as aromatic o-methylphenyl proton resonances in the 7.20-7.35 ppm region. Nevertheless, the doublet resonance of azomethine proton was found typically at 7.84 ppm, which was confirmed by heteronuclear ¹H-³¹P HMBC experiment. The H-2 and H-3 resonances of salicylidene residue were fund considerably shifted up field as doublet and doublet of doublets at 7.04 and 6.50 ppm, respectively.

The ³¹P NMR spectrum consists of broad singlet resonance at 37.24 ppm (37.12 and 37.66 ppm in CDCl₃ and in benzene-*d*₆, respectively).

The ¹³C NMR spectrum in dichloromethane showed series of singlet resonances, except the C-15 and C-16 one, which were splitted into doublets.

### Synthesis of complex 10 (Following the procedure shown on Scheme 5)

A 50 ml dried Schlenk flask was charged with 1,3-bis(2,6-dimethylphenyl)-4,5-dihydroimidazolium tetrafluoroborate (0.8 g, 3.0 equiv.) and dry hexane 10 ml under an argon atmosphere. To this suspension was added LiHMDS (3.0 equiv.) at room temperature. The reaction mixture was stirred at 50°C for 2 h, followed by filtration of this suspension to another 50 ml dried flask which contained complex 8 (0.5 g, 1.0 equiv.) under nitrogen. The reaction mixture was heated at 50°C for 16 h, allowed to cool to room temperature. The brown-orange precipitate was then filtered, washed with hexane and dried in vacuo to give 10 as a dark brown microcrystalline solid in 81%.

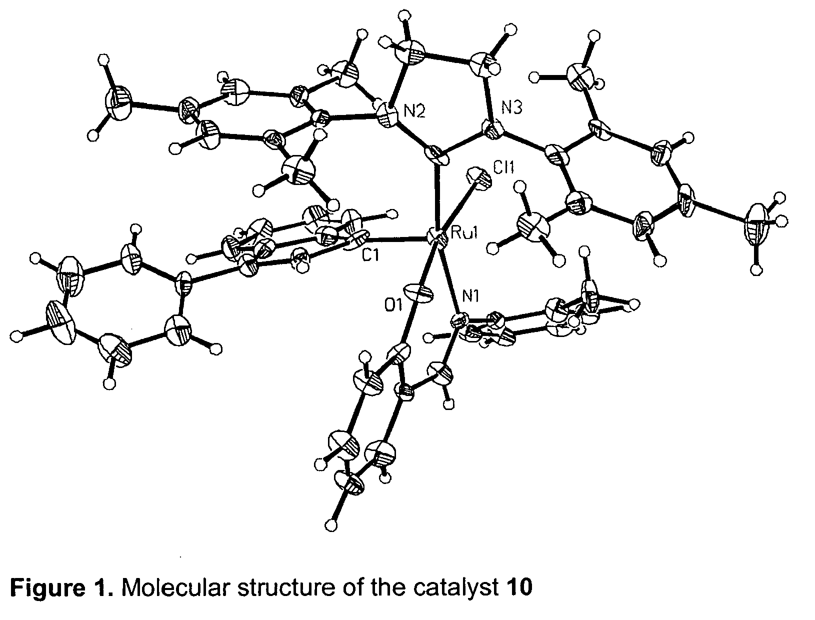

### Synthesis of complex 11 (Following the procedure shown on Scheme 5)

A 50 ml dried Schlenk flask was charged with 1-cyclohexyl, 3-(2,6-dimethylphenyl)-4,5-dihydroimidazolium tetrafluoroborate (2.0 equiv.) and dry hexane 10 ml under an argon atmosphere. To this suspension was added LHMDSi (2.0 equiv.) at room temperature. The reaction mixture was stirred at 50°C for 2 h, followed by filtration of this suspension to another 50 ml dried flask which contained complex **8** (0.5 g, 1.0 equiv.) under nitrogen. The reaction mixture was heated at 50°C for 16 h, allowed to cool to room temperature. The - orange-bown precipitate was then filtered, washed with hexane and dried in vacuo to give **11** as a orange brown microcrystalline solid. The crude product was purified by flash chromatography using mixture hexane/Et₂O. Yield 50%

### Example 2

**Complex 8.1 (Table 1; entry 13):** Indenylidene first-generation catalyst **(7)** (500 mg, 0.54 mmol), 2-[(2,6-dimethylphenylimino)methyl]phenol (pKa: 8.93 ± 0.35) (0.54 mmol), silver(I) carbonate (74.48 mg, 0.27 mmol), and THF (10 ml) were reacted as described above for 72 h. Yield (95%).

### Example 3

**Complex 8.2 (Table 1; entry 16):** Indenylidene first-generation catalyst (7) (500 mg, 0.54 mmol), 2-[(4-Bromo-2,6-dimethylphenylimino)methyl]phenol (pKa: 8.69 ± 0.35) (0.54 mmol), silver(I) carbonate (74.48 mg, 0.27 mmol), and THF (10 ml) were reacted as described above for 72 h. Yield (98%).

### Example 4

**Complex 8.3 (Table 1; entry 15):** Indenylidene first-generation catalyst **(7)** (500 mg, 0.54 mmol), 2-[(4-methyl-2,6-dimethylphenylimino)methyl]phenol (pKa: 8.84 ± 0.35) (0.54 mmol), silver(l) carbonate (74.48 mg, 0.27 mmol), and THF (10 ml) were reacted as described above for 72 h. Yield (98%).

### Example 5

**Complex 8.4 (Table 1; entry 17):** Indenylidene first-generation catalyst **(7)** (500 mg, 0.54 mmol), 2-[(2,6-diisopropylphenylimino)methyl]phenol (pKa 8.83 ± 0.35) (0.54 mmol), silver(I) carbonate (74.48 mg, 0.27 mmol), and THF (10 ml) were reacted as described above for 72 h. Yield (98%).

### Example 6

**Complex 8.5 (Table 1; entry 19):** Indenylidene first-generation catalyst **(7)** (500 mg, 0.54 mmol), 2-[(phenylimino)methyl]phenol (pKa: 8.47 ± 0.30) (0.54 mmol), silver (I) carbonate (74.48 mg, 0.27 mmol), and THF (10 ml) were reacted as described above for 72 h. Yield (92%).

### Example 7

**Complex 8.6 (Table 1; entry 21):** Indenylidene first-generation catalyst **(7)** (500 mg, 0.54 mmol), 2-[(3-bromophenylimino)methyl]phenol (pKa: 8.76 ± 0.35) (0.54 mmol), silver (I) carbonate (74.48 mg, 0.27 mmol), and THF (10 ml) were reacted as described above except for the reaction time (102 h). Obtained residue was than purified on chromatography colon. Yield (30%)

### Example 8

**Complex 8.6 (Table 1; entry 14):** Indenylidene first-generation catalyst **(7)** (500 mg, 0.54 mmol), 2-[(2-chlorophenylimino)methyl]phenol (pKa: 8.58 ± 0.35) (0.54 mmol), silver (I) carbonate (74.48 mg, 0.27 mmol), and THF (10 ml) were reacted as described above except for the reaction time (102 h). Obtained residue was than purified on chromatography colon. Yield (60%)

### Example 9 (non-working)

**Complex 8.7 (Table 1; entry 123):** Indenylidene first-generation catalyst **(7)** (500 mg, 0.54 mmol), 2-[(4-tbutylphenylimino)methyl]-4-nitrophenol (pKa: 5.88± 0.30) (0.54 mmol), silver (I) carbonate (74.48 mg, 0.27 mmol), and THF (10 ml) were reacted as described above except for the reaction time (6 h). The reaction mixture was investigated on ³¹P NMR, which did not reveal the presence of title complex.

### Example 10 (not according to the invention)

**Complex 8.8 (Table 1. Entry 118):** Indenylidene first-generation catalyst **(7)** (500 mg, 0.54 mmol), 2-[(4-chlorophenylimino)methyl]-4-nitrophenol (pKa: 5.71± 0.30) (0.54 mmol), silver (I) carbonate (74.48 mg, 0.27 mmol), and THF (10 ml) were reacted as described above except for the reaction time (24 h). The reaction mixture was investigated on ³¹P NMR, which did not reveal the presence of title complex.

### Example 11 (not according to the invention)

**Complex 8.8 (Table 1; entry 115):** Indenylidene first-generation catalyst **(7)** (500 mg, 0.54 mmol), 2-[(4-methylphenylimino)methyl]-4-nitrophenol (pKa: 5.88± 0.30) (0.54 mmol), silver (I) carbonate (74.48 mg, 0.27 mmol), and THF (10 ml) were reacted as described above except for the reaction time (24 h). The reaction mixture was investigated on ³¹P NMR, which did not reveal the presence of title complex.

### Preparation of Benzylidene-Schiff Base-Ruthenium complexes

### Example 12

**Complex A (Table 1; entry 13):** Grubbs second generation catalyst (100 mg, 0.117 mmol), 2-[(2,6-dimethylphenylimino)methyl]phenol (pKa: 8.85± 0.30) (0.117 mmol), silver (I) carbonate (16.27 mg, 0.058 mmol), and THF (2 ml) were reacted at room temperature during 2 h. The solvent was evaporated and crude reaction product purified on a chromatography column to give an orange-brown complex. Yield 22%.

### Example 13

**Complex B (Table 1; entry 15):** Grubbs second generation catalyst (100 mg, 0.117 mmol), 2-[(2,4,6-trimethylphenylimino)methyl]phenol (pKa: 8.84± 0.30) (0.117 mmol), silver (I) carbonate (16.27 mg, 0.058 mmol), and THF (2 ml) were reacted at room temperature during 2 h. The solvent was evaporated and crude reaction product purified on chromatography column to give an orange-brown complex. Yield 30%.

## Claims

1. A process for the preparation of a catalyst having the following formula: 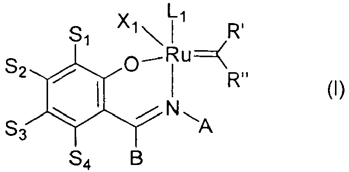 wherein
X₁ denotes an anionic ligand;
L₁ is a neutral electron donor ligand;
R' and R" are each independently hydrogen or a radical selected from the group consisting of C₁₋₂₀ alkyl, C₂₋₂₀ alkenyl, C₂₋₂₀ alkynyl, C₁₋₂₀ carboxylate, C₁₋₂₀ alkoxy, C₂₋₂₀ alkenyloxy, C₂₋₂₀ alkynyloxy, aryl, arylidene, aryloxy, C₁₋₂₀ alkoxycarbonyl, C₁₋₈ alkylthio, C₁₋₂₀ alkylsulfonyl, C₁₋₂₀ alkylsulfinyl, C₁₋₂₀ alkylsulfonate, arylsulfonate, C₁₋₂₀ alkylphosphonate, arylphosphonate, C₁₋₂₀ alkylammonium and arylammonium, optionally substituted with one or more moieties selected from the group consisting of C₁₋₁₀ alkyl, C₁₋₁₀ alkoxy, and aryl, or R' and R" may together form an aryl, arylidene, cycloalkyl or heteroaryl group, benzylidene being excluded.
S₁ to S₄ may be the same or different and are defined as for the compound of formula (III) shown below;
A is 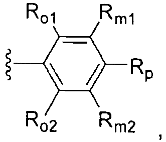 heteroaryl, substituted or unsubstituted alkyl,heteroalkyl or cycloalkyl.
B is hydrogen, C₁-C₂₀ alkyl, C₁-C₂₀ heteroalkyl aryl or heteroaryl, wherein each non-hydrogen group may be optionally substituted with one or more moieties selected from the group consisting of C₁-C₁₀ alkyl and aryl;
Rₒ₁, Rₒ₂, Rₘ₁, Rₘ₂ and Rₚ are each selected from the group consisting of hydrogen, C₁-C₂₀ alkyl, C₁-C₂₀ heteroalkyl C₁-C₂₀ alkoxy, aryl, aryloxy, heteroaryl, heterocyclolalkyl, disulfide, carbonate, isocyanate, carbodiimide, carboalkoxy, carbamate and halogen, thioether, ketone, aldehyde, ester, ether, amine, amide, nitro, carboxylic acid, the non-hydrogen groups optionally substituted with one or more moieties selected from the group consisting of C₁-C₂₀ alkyl, C₁-C₂₀ alkoxy and aryl, wherein Rₒ₁, Rₒ₂, Rₘ₁, Rₘ₂ and Rp can be joined to form a fused cyclic aliphatic or aromatic ring optionally substituted with one or more moieties selected from the group consisting of C₁-C₂₀ alkyl, C₁-C₂₀ heteroalkyl, C₁-C₂₀ alkoxy, aryl, aryloxy, heteroaryl, heterocycloalkyl, heterocycloalkyl, disulfide, carbonate, isocyanate, carbodiimide, carboalkoxy, carbamate and halogen, thioether, ketone, aldehyde, ester, ether, amine, amide, nitro, carboxylic acid, the non-hydrogen groups optionally substituted with one or more moieties selected from the group consisting of C₁-C₂₀ alkyl, C₁-C₂₀ alkoxy and aryl, comprising the following steps according to variant A or B:
**variant A**
(i) reacting a compound of the formula (II) 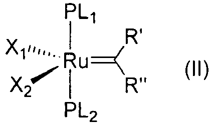 wherein PL₁ and PL₂ are the same or different and each denote a phosphine ligand, R' and R" are as defined above, and X₁ and X₂ may be the same or different and each denote an anionic ligand
with a compound of the formula (III) 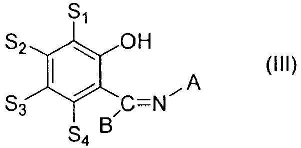 wherein A and B are as defined above and S₁ to S₄ are substituents which are selected from the group consisting of hydrogen, nitro, ammonium, halogen, substituted or unsubstituted amino, mono- and dialkylamino, C₁-C₂₀ alkyl, C₁-C₂₀ alkoxy, thioalkyl, aryl, aryloxy, piperidinyl, 1-pyrrolidino and 2-pyridyl such that the compound of the formula (III) has a pKₐ ≥ 6.2 in the presence of a weak base having a pK_{b} in the range of 3.5 - 7.0 to obtain a compound of the formula (IV) 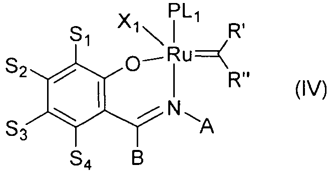 wherein PL₁, S₁ to S₄, A, B, X₁, R' and R" are as defined above,
(ii) reacting the compound of formula (IV) with a precursor of a non-phosphine neutral electron donor ligand to obtain catalyst (I) or
**variant B**
(i) reacting a compound of the formula (V) 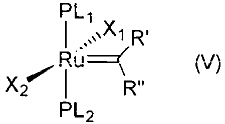 wherein PL₁, PL₂, X₁, X₂, R' and R" are as defined above with a precursor of a non-phosphine ligand L₁ as defined above to obtain a compound of the formula (VI) 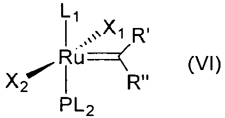 wherein L₁, PL₂, X₁,X₂, R' and R" are as defined above, and
(ii) reacting the compound of formula (VI) with a compound of the formula (III) 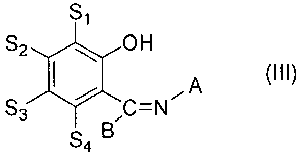 wherein S₁ to S₄, A and B are as defined above, in the presence of a weak base having a pK_{b} in the range of 3.5 - 7.0.

2. The process according to claim 1 wherein the weak base is selected from the group consisting of Ag₂CO₃, CuCO₃, Li₂CO₃, Na₂CO₃ and K₂CO₃.

3. The process according to claim 1 or 2 wherein the weak base is used in an amount of 1 to 2 equivalents relative to the amount of compound (III).

4. The process of claim 1 wherein in step (i) of variant A the compounds of the formulae (II) and (III), and the weak base are mixed and a solvent is added.

5. The process of claim 4 wherein the solvent has a dielectric constant ≥ 3.

6. The process according to claim 5 wherein the solvent is selected from the group consisting of tetrahydrofuran, CH₂Cl₂, chloroform, diethyl ether and mixtures thereof.

7. The process according to claim 1 wherein L₁ is SIMes (1,3-bis(mesityl)-2-imidazol-dinylidene or 1,3-bis(2,4,5-trimethylphenyl)-4,5-dihydroimidazol-2-ylidene) or IMes (1,3-bis(2,4,6-trimethylphenyl)imidazol-2-ylidene).

8. The process according to claim 1 wherein X₁ and/or X₂ is halogen, preferable chloride.

9. The process according to claim 1 wherein the substituents S₁ to S₄ are selected from the group consisting of hydrogen, methoxy, methylthio, amino, dimethylamino, trifluoromethyl, trifluoromethoxy, t-butyl, phenyl, phenoxy, chloro, bromo and 4-tert-butylphenoxy.

10. The process according to claim 1 wherein Rₒ₁, Rₒ₂, Rₘ₁, Rₘ₂ and Rₚ are selected from the group consisting of hydrogen, methyl, isopropyl, t-butyl, methoxy, dimethylamino and nitro.

11. The process according to claim 1 wherein the compound of formula (III) is a compound selected from the group consisting of compound Nos. 1 to 14 wherein B is hydrogen, A is 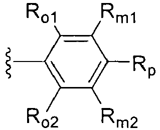 and S₁ to S₄ and Rₒ₁, Rₒ₂, Rₘ₁, Rₘ₂ and Rₚ are as defined below:
| **Phenolic part** | | | | | **Aniline part** | | | | |
|---|---|---|---|---|---|---|---|---|---|
| **Compound No.** | **S¹** | **S²** | **S³** | **S⁴** | **Rₒ₁** | **Rₒ₂** | **Rₘ₁** | **Rₘ₂** | **Rₚ** |
| **1** | **H** | **H** | **H** | **H** | **-CH₃** | **H** | **H** | **H** | **H** |
| **2** | **H** | **H** | **OCH₃** | **H** | **-CH₃** | **H** | **H** | **H** | **H** |
| **3** | **H** | **OCH₃** | **H** | **H** | **-CH₃** | **H** | **H** | **H** | **H** |
| **4** | **H** | **H** | **OCH₃** | **H** | **H** | **H** | **H** | **H** | **-^{t}But** |
| **5** | **H** | **OCH₃** | **H** | **H** | **H** | **H** | **H** | **H** | **-'But** |
| **6** | **-^{t}But** | **H** | **-^{t}But** | **H** | **-CH₃** | **H** | **H** | **H** | **H** |
| **7** | **-^{t}But** | **H** | **-^{t}But** | **H** | **H** | **H** | **H** | **H** | **-^{t}But** |
| **8** | **H** | **-^{t}But** | **H** | **H** | **CH₃** | **H** | **H** | **H** | **H** |
| **9** | **H** | **-^{t}But** | **H** | **H** | **H** | **H** | **H** | **H** | **-^{t}But** |
| **10** | **H** | **H** | **H** | **H** | **H** | **H** | **Br** | **H** | **H** |
| **11** | **H** | **H** | **H** | **H** | **H** | **H** | **H** | **H** | **-^{t}But** |
| **12** | **H** | **OCH₃** | **H** | **H** | **H** | **H** | **H** | **H** | **N(CH₃)₂** |
| **13** | **H** | **H** | **OCH₃** | **H** | **-CH₃** | **-CH₃** | **H** | **H** | **H** |
| **14** | **H** | **OCH₃** | **H** | **H** | **-CH₃** | **-CH₃** | **H** | **H** | **H** |

## Patentansprüche

1. Verfahren zur Herstellung eines Katalysators mit der nachstehenden Formel: 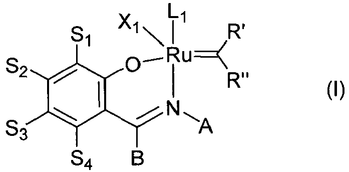 worin
X₁ ein anionischer Ligand ist;
L₁ ein neutraler Elektronendonorligand ist;
R' und R" jeweils unabhängig Wasserstoff oder ein Rest sind, ausgewählt aus der Gruppe, bestehend aus C₁₋₂₀-Alkyl, C₂₋₂₀-Alkenyl, C₂₋₂₀-Alkinyl, C₁₋₂₀-Carboxylat, C₁₋₂₀-Alkoxy, C₂₋₂₀-Alkenyloxy, C₂₋₂₀-Alkinyloxy, Aryl, Aryliden, Aryloxy, C₁₋₂₀-Alkoxycarbonyl, C₁₋₈-Alkylthio, C₁₋₂₀-Alkylsulfonyl, C₁₋₂₀-Alkylsulfinyl, C₁₋₂₀-Alkylsulfonat, Arylsulfonat, C₁₋₂₀-Alkylphosphonat, Arylphosphonat, C₁₋₂₀-Alkylammonium und Aryl-ammonium, gegebenenfalls substituiert mit einem oder mehreren Rest(en), ausgewählt aus der Gruppe, bestehend aus C₁₋₁₀-Alkyl, C₁₋₁₀-Alkoxy und Aryl, oder R' und R" können zusammen eine Aryl-, Aryliden-, Cycloalkyl- oder Heteroarylgruppe bilden, wobei Benzyliden ausgenommen ist;
S₁ bis S₄ gleich oder verschieden sein können und wie für die nachstehend angegebene Verbindung der Formel (III) definiert sind;
A 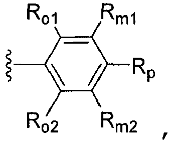 Heteroaryl, substituiertes oder unsubstituiertes Alkyl, Heteroalkyl oder Cycloalkyl ist;
B Wasserstoff, C₁-C₂₀-Alkyl, C₁-C₂₀-Heteroalkylaryl oder Heteroaryl ist, wobei jede der Nicht-Wasserstoffgruppen gegebenenfalls substituiert sein kann mit einem oder mehreren Rest(en), ausgewählt aus der Gruppe, bestehend aus C₁-C₁₀-Alkyl und Aryl;
Rₒ₁, Rₒ₂, Rₘ₁, Rₘ₂ und Rₚ jeweils ausgewählt sind aus der Gruppe, bestehend aus Wasserstoff, C₁-C₂₀-Alkyl, C₁-C₂₀-Heteroalkyl, C₁-C₂₀-Alkoxy, Aryl, Aryloxy, Heteroaryl, Heterocycloalkyl, Disulfid, Carbonat, Isocyanat, Carbodiimid, Carboalkoxy, Carbamat und Halogen, Thioether, Keton, Aldehyd, Ester, Ether, Amin, Amid, Nitro, Carbonsäure, wobei die Nicht-Wasserstoffgruppen gegebenenfalls substituiert sind mit einem oder mehreren Rest(en), ausgewählt aus der Gruppe, bestehend aus C₁-C₂₀-Alkyl, C₁-C₂₀-Alkoxy und Aryl, wobei Rₒ₁, Rₒ₂, Rₘ₁, Rₘ₂ und Rₚ verbunden sein können, um einen anellierten cyclischen aliphatischen oder aromatischen Ring zu bilden, gegebenenfalls substituiert mit einem oder mehreren Resten, ausgewählt aus der Gruppe, bestehend aus C₁-C₂₀-Alkyl, C₁-C₂₀-Heteroalkyl, C₁-C₂₀-Alkoxy, Aryl, Aryloxy, Heteroaryl, Hetero-cycloalkyl, Heterocycloalkyl, Disulfid, Carbonat, Isocyanat, Carbodiimid, Carboalkoxy, Carbamat und Halogen, Thioether, Keton, Aldehyd, Ester, Ether, Amin, Amid, Nitro, Carbonsäure, wobei die Nicht-Wasserstoffgruppen gegebenenfalls substituiert sind mit einem oder mehreren Rest(en), ausgewählt aus der Gruppe, bestehend aus C₁-C₂₀-Alkyl, C₁-C₂₀-Alkoxy und Aryl, umfassend die nachfolgenden Schritte gemäß Variante A oder B:
**Variante A**
(i) Umsetzen einer Verbindung der Formel (II) 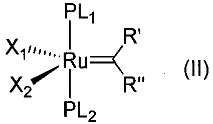 worin PL₁ und PL₂ gleich oder verschieden sind und jeweils ein Phosphinligand sind, R' und R" wie vorstehend definiert sind, und X₁ und X₂ gleich oder verschieden sein können und jeweils ein anionischer Ligand sind,
mit einer Verbindung der Formel (III) 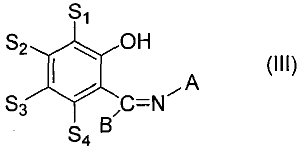 worin A und B wie vorstehend definiert sind und S₁ bis S₄ Substituenten sind, ausgewählt aus der Gruppe, bestehend aus Wasserstoff, Nitro, Ammonium, Halogen, substituiertem oder unsubstituiertem Amino, Mono- und Dialkylamino, C₁-C₂₀-Alkyl, C₁-C₂₀-Alkoxy, Thioalkyl, Aryl, Aryloxy, Piperidinyl, 1-Pyrro-lidino und 2-Pyridyl, so dass die Verbindung der Formel (III) einen pKₐ ≥ 6,2 aufweist und in Gegenwart einer schwachen Base mit einem pK_{b} im Bereich von 3, 5 - 7,0, um eine Verbindung der Formel (IV) 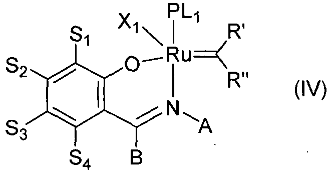 zu erhalten, worin PL₁, S₁ bis S₄, A, B, X₁, R' und R" wie vorstehend definiert sind,
(ii) Umsetzen der Verbindung der Formel (IV) mit einer Vorstufe eines Nicht-Phosphin-neutralen Elektronendonorliganden, um Katalysator (I) zu erhalten oder
**Variante B**
(i) Umsetzen einer Verbindung der Formel (V) 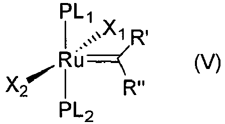 worin PL₁, PL₂, X₁, X₂, R' und R" wie vorstehend definiert sind, mit einer Vorstufe eines Nicht-Phosphinliganden L₁, wie vorstehend definiert, um eine Verbindung der Formel (VI) 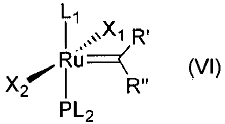 zu erhalten, worin L₁, PL₂, X₁, X₂, R' und R" wie vorstehend definiert sind, und
(ii) Umsetzen der Verbindung der Formel (VI) mit einer Verbindung der Formel (III) 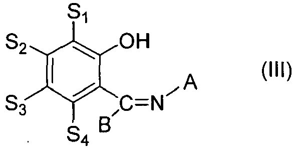 worin S₁ bis S₄, A und B wie vorstehend definiert sind, in Gegenwart einer schwachen Base mit einem pK_{b} im Bereich von 3,5 - 7,0.

2. Verfahren nach Anspruch 1, wobei die schwache Base ausgewählt ist aus der Gruppe, bestehend aus Ag₂CO₃, CuCO₃, Li₂CO₃, Na₂CO₃ und K₂CO₃.

3. Verfahren nach Anspruch 1 oder 2, wobei die schwache Base in einer Menge von 1 bis 2 Äquivalenten, bezogen auf die Menge der Verbindung (III), verwendet wird.

4. Verfahren nach Anspruch 1, wobei in Schritt (i) der Variante A die Verbindungen der Formeln (II) und (III) und die schwache Base gemischt werden und ein Lösungsmittel zugegeben wird.

5. Verfahren nach Anspruch 4, wobei das Lösungsmittel eine dielektrische Konstante ≥ 3 aufweist.

6. Verfahren nach Anspruch 5, wobei das Lösungsmittel ausgewählt ist aus der Gruppe, bestehend aus Tetrahydrofuran, CH₂Cl₂, Chloroform, Diethylether und Gemischen davon.

7. Verfahren nach Anspruch 1, wobei L₁ SIMes (1,3-Bis(mesityl)-2-imidazol-dinyliden oder 1,3-Bis(2,4,5-trimethylphenyl)-4,5-dihydroimidazol-2-yliden) oder IMes (1,3-Bis(2,4,6-trimethylphenyl)imidazol-2-yliden) ist.

8. Verfahren nach Anspruch 1, wobei X₁ und/oder X₂ Halogen, vorzugsweise Chlorid, ist.

9. Verfahren nach Anspruch 1, wobei die Substituenten S₁ bis S₄ ausgewählt sind aus der Gruppe, bestehend aus Wasserstoff, Methoxy, Methylthio, Amino, Dimethylamino, Trifluormethyl, Trifluormethoxy, t-Butyl, Phenyl, Phenoxy, Chlor, Brom und 4-tert-Butylphenoxy.

10. Verfahren nach Anspruch 1, wobei Rₒ₁, Rₒ₂, Rₘ₁, Rₘ₂ und Rₚ ausgewählt sind aus der Gruppe, bestehend aus Wasserstoff, Methyl, Isopropyl, t-Butyl, Methoxy, Dimethylamino und Nitro.

11. Verfahren nach Anspruch 1, wobei die Verbindung der Formel (III) eine Verbindung ist, ausgewählt aus der Gruppe, bestehend aus Verbindungen Nrn. 1 bis 14, worin B Wasserstoff ist, A 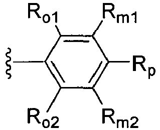 ist und S₁ bis S₄ und Rₒ₁, Rₒ₂, Rₘ₁, Rₘ₂ und Rₚ wie nachstehend definiert sind:
| **Phenolteil** | | | | | **Anilinteil** | | | | |
|---|---|---|---|---|---|---|---|---|---|
| **Verbindungsnummer** | **S¹** | **S²** | **S³** | **S⁴** | **Rₒ₁** | **Rₒ₂** | **Rₘ₁** | **Rₘ₂** | **Rₚ** |
| **1** | **H** | **H** | **H** | **H** | **-CH₃** | **H** | **H** | **H** | **H** |
| **2** | **H** | **H** | **OCH₃** | **H** | **-CH₃** | **H** | **H** | **H** | **H** |
| **3** | **H** | **OCH₃** | **H** | **H** | **-CH₃** | **H** | **H** | **H** | **H** |
| **4** | **H** | **H** | **OCH₃** | **H** | **H** | **H** | **H** | **H** | **-^{t}But** |
| **5** | **H** | **OCH₃** | **H** | **H** | **H** | **H** | **H** | **H** | **-^{t}But** |
| **6** | **-^{t}But** | **H** | **-^{t}But** | **H** | **-CH₃** | **H** | **H** | **H** | **H** |
| **7** | **-^{t}But** | **H** | **-^{t}But** | **H** | **H** | **H** | **H** | **H** | **-^{t}But** |
| **8** | **H** | **-^{t}But** | **H** | **H** | **CH₃** | **H** | **H** | **H** | **H** |
| | | | | | | | | | |
|---|---|---|---|---|---|---|---|---|---|
| **9** | **H** | **-^{t}But** | **H** | **H** | **H** | **H** | **H** | **H** | **-^{t}But** |
| **10** | **H** | **H** | **H** | **H** | **H** | **H** | **Br** | **H** | **H** |
| **11** | **H** | **H** | **H** | **H** | **H** | **H** | **H** | **H** | **-^{t}But** |
| **12** | **H** | **OCH₃** | **H** | **H** | **H** | **H** | **H** | **H** | **N(CH₃)₂** |
| **13** | **H** | **H** | **OCH₃** | **H** | **-CH₃** | **-CH₃** | **H** | **H** | **H** |
| **14** | **H** | **OCH₃** | **H** | **H** | **-CH₃** | **-CH₃** | **H** | **H** | **H** |

## Revendications

1. Procédé de préparation d'un catalyseur ayant la formule suivante : 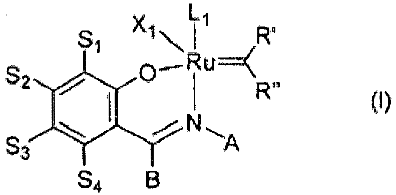 dans laquelle
X₁ indique un ligand anionique ;
L₁ est un ligand neutre donneur d'électrons ;
R' et R" sont chacun indépendamment un hydrogène ou un radical choisi dans le groupe constitué par un alkyle en C₁ à C₂₀, un alcényle en C₂ à C₂₀, un alcynyle en C₂ à C₂₀, un carboxylate en C₁ à C₂₀, un alcoxy en C₁ à C₂₀, un alcényloxy en C₂ à C₂₀, un alcynyloxy en C₂ à C₂₀, un aryle, un arylidène, un aryloxy, un alcoxycarbonyle en C₁ à C₂₀, un alkylthio en C₁ à C₈, un alkylsulfonyle en C₁ à C₂₀, un alkylsulfinyle en C₁ à C₂₀, un alkylsulfonate en C₁ à C₂₀, un arylsulfonate, un alkylphosphonate en C₁ à C₂₀, un arylphosphonate, un alkylammonium en C₁ à C₂₀ et un arylammonium, facultativement substitué avec un ou plusieurs fragments choisis dans le groupe constitué par un alkyle en C₁ à C₁₀, un alcoxy en C₁ à C₁₀ et un aryle, ou R' et R" peuvent former ensemble un groupe aryle, arylidène, cycloalkyle ou hétéroaryle, le benzylidène étant exclu,
S₁ à S₄ peuvent être identiques ou différents et sont définis comme pour le composé de formule (III) représentée ci-dessous ;
A est 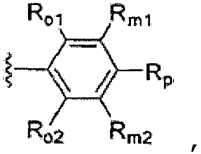 un hétéroaryle, un alkyle substitué ou non substitué, un hétéroalkyle ou un cycloalkyle.
B est un hydrogène, un alkyle en C₁ à C₂₀, un hétéroalkyle en C₁ à C₂₀, un aryle ou un hétéroaryle, dans lequel chaque groupe non-hydrogène peut être facultativement substitué avec un ou plusieurs fragments choisis dans le groupe constitué par un alkyle en C₁ à C₁₀ et un aryle ;
Rₒ₁, Rₒ₂, Rₘ₁, Rₘ₂ et Rₚ sont choisis chacun dans le groupe constitué par un hydrogène, un alkyle en C₁ à C₂₀, un hétéroalkyle en C₁ à C₂₀, un alcoxy en C₁ à C₂₀, un aryle, un aryloxy, un hétéroaryle, un hétérocycloalkyle, un disulfure, un carbonate, un isocyanate, un carbodiimide, un carboalcoxy, un carbamate et un halogène, un thioéther, une cétone, un aldéhyde, un ester, un éther, une amine, un amide, un nitro, un acide carboxylique, les groupes non-hydrogène étant facultativement substitués avec un ou plusieurs fragments choisis dans le groupe constitué par un alkyle en C₁ à C₂₀, un alcoxy en C₁ à C₂₀ et un aryle, dans lequel Rₒ₁, Rₒ₂, Rₘ₁, Rₘ₂ et Rₚ peuvent être joints pour former un cycle aliphatique ou aromatique cyclique condensé facultativement substitué avec un ou plusieurs fragments choisis dans le groupe constitué par un alkyle en C₁ à C₂₀, un hétéroalkyle en C₁ à C₂₀, un alcoxy en C₁ à C₂₀, un aryle, un aryloxy, un hétéroaryle, un hétérocycloalkyle, un hétérocycloalkyle, un disulfure, un carbonate, un isocyanate, un carbodiimide, un carboalcoxy, un carbamate et un halogène, un thioéther, une cétone, un aldéhyde, un ester, un éther, une amine, un amide, un nitro, un acide carboxylique, les groupes non-hydrogène étant facultativement substitués avec un ou plusieurs fragments choisis dans le groupe constitué par un alkyle en C₁ à C₂₀, un alcoxy en C₁ à C₂₀ et un aryle, comprenant les étapes suivantes selon la variante A ou B
Variante A
(i) la réaction d'un composé de formule (II) 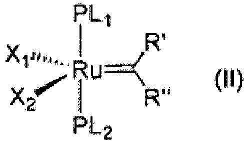 dans laquelle PL₁ et PL₂ sont identiques ou différents et chacun indique un ligand de type phosphine, R' et R" sont tels que définis ci-dessus, et X₁ et X₂ peuvent être identiques ou différents et chacun indique un ligand anionique
avec un composé de formule (III) 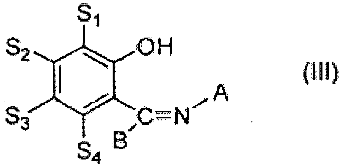 dans laquelle A et B sont tels que définis ci-dessus et S₁ à S₄ sont des substituants qui sont choisis dans le groupe constitué par un hydrogène, un nitro, un ammonium, un halogène, un amino substitué ou non substitué, un mono- et di-alkylamino, un alkyle en C₁ à C₂₀, un alcoxy en C₁ à C₂₀, un thioalkyle, un aryle, un aryloxy, un pipéridinyle, un 1-pyrrolidono et un 2-pyridyle, de manière à ce que le composé de formule (III) ait un pKa ≥ 6,2, en présence d'une base faible ayant un pK_{b} situé dans la plage allant de 3,5 à 7,0 pour obtenir un composé de formule (IV) 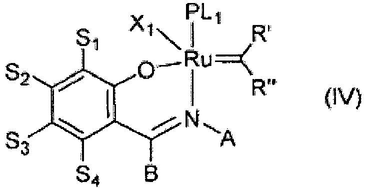 dans laquelle PL₁, S₁ à S₄, A, B, X₁, R' et R" sont tels que définis ci-dessus,
(ii) la réaction du composé de formule (IV) avec un précurseur de ligand neutre non-phosphine donneur d'électrons pour obtenir le catalyseur (I) ou
Variante B
(i) la réaction d'un composé de formule (V) 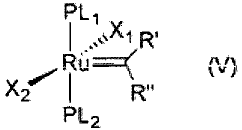 dans laquelle PL₁, PL₂, X₁, X₂, R' et R" sont tels que définis ci-dessus avec un précurseur de ligand non-phosphine L₁ tel que défini ci-dessus pour obtenir un composé de formule (VI) 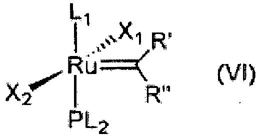 dans laquelle L₁, PL₂, X₁. X₂, R' et R" sont tels que définis ci-dessus, et
(ii) la réaction du composé de formule (VI) avec un composé de formule (III) 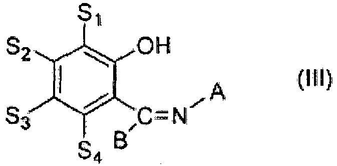 dans laquelle S₁ à S₄, A et B sont tels que définis ci-dessus, en présence d'une base faible ayant un pK_{b} situé dans la plage allant de 3,5 à 7,0.

2. Procédé selon la revendication 1, dans lequel la base faible est choisie dans le groupe constitué par Ag₂CO₃, CuCO₃, Li₂CO₃, Na₂CO₃ et K₂CO₃.

3. Procédé selon la revendication 1 ou 2, dans lequel la base faible est utilisée en une quantité de 1 à 2 équivalents par rapport à la quantité du composé (III).

4. Procédé selon la revendication 1, dans lequel, dans l'étape (i) de la variante A, les composés de formule (II) et (III) et la base faible sont mélangés et un solvant est ajouté.

5. Procédé selon la revendication 4, dans lequel le solvant présente une constante diélectrique ≥ 3.

6. Procédé selon la revendication 5, dans lequel le solvant est choisi dans le groupe constitué par le tétrahydrofuranne, le CH₂Cl₂, le chloroforme, le diéthyl éther et leurs mélanges.

7. Procédé selon la revendication 1, dans lequel L₁ est SIMes (1,3-bis(mésityl)-2-imidazol-dinylidène ou 1,3-bis(2,4,5-triméthylphényl)-4,5-dihydroimidazol-2-ylidène) ou IMes (1,3-bis(2,4,6-triméthylphényl)-imidazol-2-ylidène).

8. Procédé selon la revendication 1, dans lequel X₁ et/ou X₂ est un halogène, de préférence le chlore.

9. Procédé selon la revendication 1, dans lequel les substituants S₁ à S₄ sont choisis dans le groupe constitué par un hydrogène, un méthoxy, un méthylthio, un amino, un diméthylamino, un trifluorométhyle, un trifluorométhoxy, un t-butyle, un phényle, un phénoxy, un chloro, un bromo et un 4-tert-butylphénoxy.

10. Procédé selon la revendication 1, dans lequel Rₒ₁, Rₒ₂, Rₘ₁, Rₘ₂ et Rₚ sont choisis dans le groupe constitué par un hydrogène, un méthyle, un isopropyle, un t-butyle, un méthoxy, un diméthylamino et un nitro.

11. Procédé selon la revendication 1, dans lequel le composé de formule (III) est un composé choisi dans le groupe constitué par les composés numéro 1 à 14 dans lequel B est un hydrogène, A est 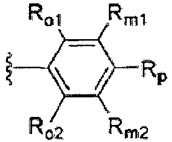 et S₁ à S₄ et Rₒ₁, Rₒ₂, Rₘ₁, Rₘ₂ et Rₚ sont tels que définis ci-dessous :
| Partie phénolique | | | | | Partie aniline | | | | |
|---|---|---|---|---|---|---|---|---|---|
| Composé No. | S¹ | S² | S³ | S⁴ | Rₒ₁ | Rₒ₂ | Rₘ₁ | Rₘ₂ | Rₚ |
| 1 | H | H | H | H | -CH₃ | H | H | H | H |
| 2 | H | H | OCH₃ | H | -CH₃ | H | H | H | H |
| 3 | H | OCH₃ | H | H | -CH₃ | H | H | H | H |
| 4 | H | H | OCH₃ | H | H | H | H | H | -^{t}But |
| 5 | H | OCH₃ | H | H | H | H | H | H | -^{t}But |
| 6 | -^{t}But | H | -^{t}But | H | -CH₃ | H | H | H | H |
| 7 | -^{t}But | H | -^{t}But | H | H | H | H | H | -^{t}But |
| 8 | H | -^{t}But | H | H | CH₃ | H | H | H | H |
| 9 | H | -^{t}But | H | H | H | H | H | H | -^{t}But |
| 10 | H | H | H | H | H | H | Br | H | H |
| 11 | H | H | H | H | H | H | H | H | -^{t}But |
| 12 | H | OCH₃ | H | H | H | H | H | H | N(CH₃)₂ |
| 13 | H | H | OCH₃ | H | -CH₃ | -CH₃ | H | H | H |
| 14 | H | OCH₃ | H | H | -CH₃ | -CH₃ | H | H | H |
